# EUROPEAN PATENT APPLICATION

(11) **EP 1 898 355 A1**
(43) Date of publication of application: **12.03.2008**
(21) Application number: 06767634.6
(22) Date of filing: 29.06.2006
(51) Int. Cl.: G06T 7/00

(54) **APPARATUS AND METHOD FOR IDENTIFYING MARKER**

(30) Priority: 30.06.2005 JP 2005192809
(71) Applicant: Olympus Corporation, Tokyo 151-0072 (JP)
(72) Inventor: SHIBASAKI, Takao c/o Olympus Int. Property Services Co., Ltd., Tokyo 192-8512 (JP); FURUHASHI, Yukihito c/o Olympus Int. Property Services Co., Ltd., Tokyo 192-8512 (JP); ONO, Kazuo c/o Olympus Int. Property Services Co., Ltd., Tokyo 192-8512 (JP)
(74) Representative: von Hellfeld, Axel
(86) International application number: PCT/JP2006/313017
(87) International publication number: WO 2007/004521

(57) **Abstract**

A mobile application (13) and a matching processing section (21) execute template matching on an image input by an image input section (11), using classification templates (51) registered in a classification TP data management DB (22) and corresponding to classification information on markers. The mobile application (13) and matching processing section (21) further execute template matching on the image input by the image input section (11), using individual templates (52) corresponding to the classification template matched in the classification template matching and to detailed information on the markers.

## Description

### Technical Field

The present invention relates to apparatus and method for identifying a marker contained in an image.

### Background Art

What is called template matching has been widely known as a technique for identifying a marker contained in an input image. With this technique, marker images accumulated in a database have their resolution lowered to a predetermined value to create templates, which are then registered in the database. Then, a matching process is executed on these templates and an input marker image with its resolution reduced to a similar value.

However, such template matching may result in a mismatch to a similar marker image. Thus, to reduce mismatches, a similarity table is used to check the similarity among the templates to prevent the registration of similar marker images. However, the possibility of mismatching increases in keeping with the number of templates registered.

Another known method determines a feature value that determines the similarity on the basis of arrangement of feature points. As disclosed in, for example, Jpn. Pat. Appln. KOKAI Publication No. 2004-362186, if a large number of matching databases are held and referenced, a possible technique for the above method attempts to reduce the time required for processing by arranging matching servers in parallel and dividing a large number of reference data into groups for matching.

### Disclosure of Invention

However, the present inventors' experiments show that in spite of its effect of a stochastic increase in processing speed, such a parallel matching process as disclosed in Jpn. Pat. Appln. KOKAI Publication No. 2004-362186 is not effective for improving recognition (success) rate.

Further, even with the parallel processing, the time required for a matching process increases consistently with the number of templates registered.

In view of the above points, it is an object of the present invention to provide an apparatus and method for identifying a marker, which can quickly and accurately identify a marker contained in an image.

An aspect of a maker identifying apparatus in accordance with the present invention is an apparatus identifying a marker contained in an image, characterized by comprising image input means for inputting an image to the apparatus, classification template matching means for executing template matching on the input image input by the image input means, using classification templates corresponding to classification information on markers, and individual template matching means for executing template matching on the input image input by the image input means, using individual templates corresponding to the classification template matched in the classification template matching and to detailed information on the markers.

An aspect of a method for identifying a marker in accordance with the present invention is a method for identifying a marker contained in an image, characterized by comprising inputting an image, executing template matching on the input image using classification templates corresponding to classification information on markers, and executing template matching on the input image using individual templates corresponding to the classification template matched in the classification template matching and to detailed information on the markers.

### Brief Description of Drawings

FIG. 1 is a diagram showing the configuration of a marker identifying apparatus in accordance with an embodiment of the present invention;
FIG. 2 is a diagram showing an example of a target image and a page space in which the target image is located;
FIG. 3 is a diagram showing an example of a target image;
FIG. 4 is a diagram showing an example of a classification template;
FIG. 5 is a diagram showing an example of an individual template;
FIG. 6 is a diagram showing an example of classification templates and individual templates corresponding to a plurality of target images;
FIG. 7 is a flowchart of a classification template creating process in a TP creating section;
FIG. 8 is a diagram illustrating problems with conventional template matching;
FIG. 9 is a diagram illustrating the effects of use of a classification template;
FIG. 10 is a flowchart of an individual template creating process in the TP creating section;
FIG. 11 is a flowchart of a terminal operation process in a mobile application in a mobile terminal with a camera;
FIG. 12 is a flowchart of a matching process in a matching process section of a server;
FIG. 13 is a diagram showing a template area division layout in a first specific example;
FIG. 14 is a flowchart illustrating operations in the first specific example;
FIG. 15 is a diagram showing a template area division layout in a second specific example;
FIG. 16 is a flowchart illustrating operations in the second specific example;
FIG. 17 is a flowchart illustrating operations in a third specific example;
FIG. 18 is a diagram showing an example of a primary marker and a secondary marker;
FIG. 19 is a diagram showing another example of a primary marker and a secondary marker;
FIG. 20 is a diagram showing the configuration of a marker identifying apparatus in a fourth specific example;
FIG. 21 is a flowchart illustrating operations in a fourth specific example;
FIG. 22 is a diagram showing an example of display in a fifth specific example;
FIG. 23 is a diagram showing another example of display in a fifth specific example;
FIG. 24 is a diagram illustrating operations in a sixth specific example; and
FIG. 25 is a diagram illustrating the effects of the sixth specific example.

### Best Mode for Carrying Out the Invention

With reference to the drawings, description will be given of the best modes for carrying out the present invention.

A marker identifying apparatus according to an embodiment of the present invention is composed of a mobile terminal 10 with a camera and template matching means. The mobile terminal 10 with the camera includes an image input section (camera) 11 as image input means for inputting images to the apparatus and a display 12 as output means for outputting particular results. The template matching means uses templates registered in a database to execute template matching on an image input by the image input section 11. The template matching means is implemented by a mobile application 13 in the mobile phone 10 with the camera and a matching processing section 21 constructed in a server 20 that can communicate with the mobile terminal 10 with the camera.

Here, the server 20 further includes a classification template (TP) data management database (DB) 22 and an individual TP data management DB 23. Classification templates are created from marker classification information. Further, individual templates correspond to the respective classification templates and are created from marker detailed information. The matching processing section 21 first uses the classification templates registered in the classification TP data management DB 22 to execute template matching on an image input by the image input section 11 and sent by the mobile application 13. Subsequently, template matching is executed on the input image using one of the individual templates registered in the individual TP data management DB 23 which corresponds to the classification template matched in the classification template matching.

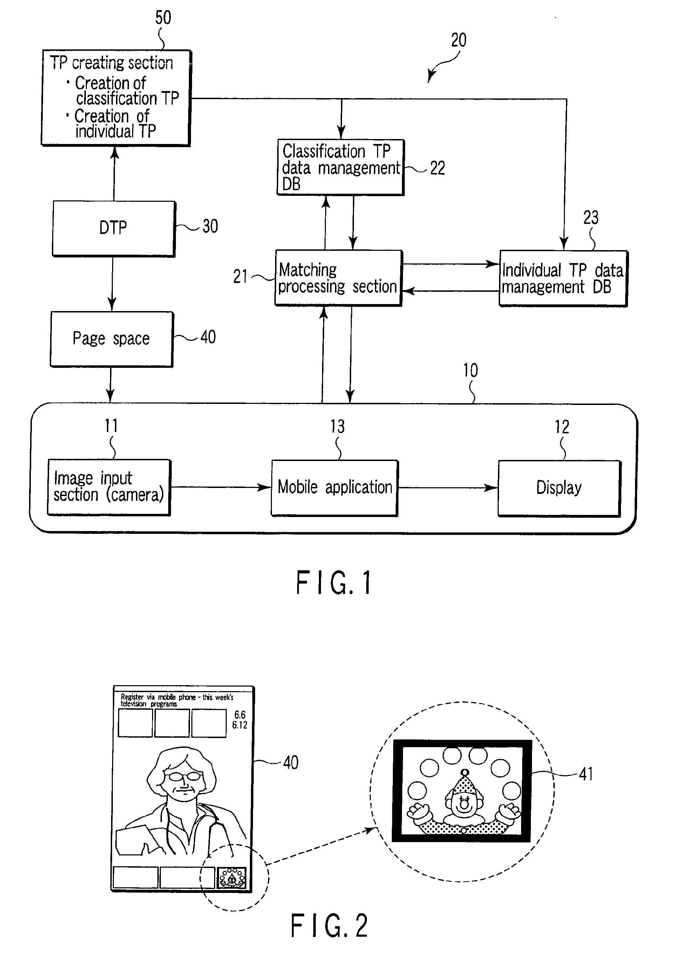

The classification templates registered in the classification TP data management DB 22 and the individual templates registered in the individual TP data management DB 23 are created by a TP creating section 50 from respective target images 41 located in a page space 40 by a desk top publishing (DTP) 30. That is, in a retrieval system in accordance with the present embodiment, DTP 30 pre-prints the target image 41 in the page space 40 as a marker as shown in FIG. 2. At the same time, the TP creating section 50 creates a classification template and an individual template for the target image 41. The TP creating section 50 then registers the created templates in the classification TP data management DB 22 and individual TP data management DB 23 of the server 20. For a large number of target images 41 (markers), such an operation of creating and registering templates is repeated.

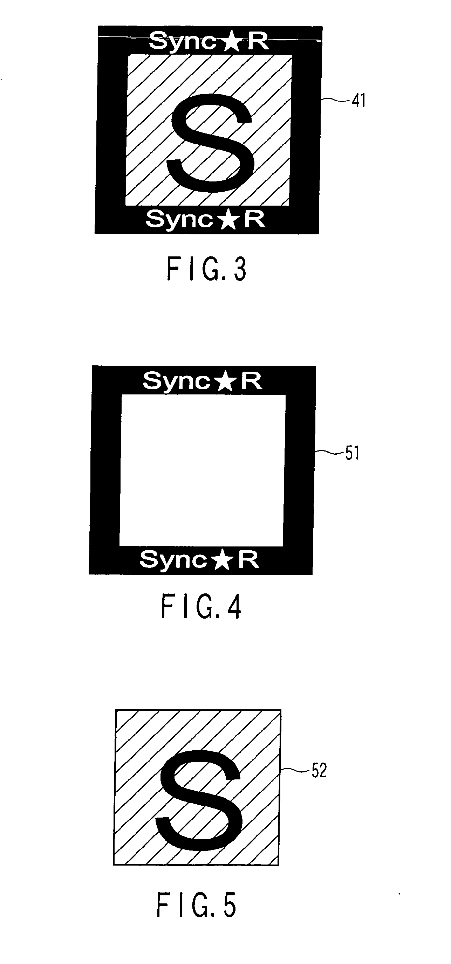

That is, in the present embodiment, for each target image 41 such as the one shown in FIG. 3, a classification template 51 such as the one shown in FIG. 4 and an individual template 52 such as the one shown in FIG. 5 are created and registered.

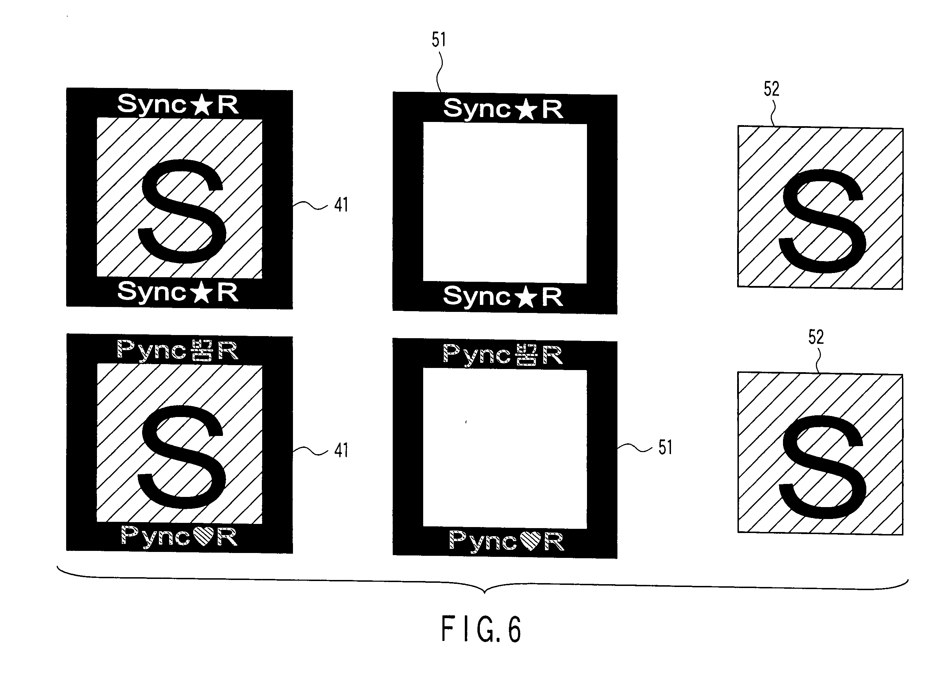

Here, the same classification template 51 corresponds to a plurality of target images 41 if they are classified into the same category. That is, the classification template 51 and the individual template 52 may be on a 1:n correspondence. Further, as shown in FIG. 6, in spite of the same individual template 52 created from separate target images 41, if the target images 41 result in different classification templates 51, the classification template 51 and the individual template 52 are on an n:n correspondence.

A user uses the image input section 11 of the mobile terminal 10 with the camera to capture the target image 41 as a marker from the page space 40. Then, the mobile application 13 extracts features from the input image and sends the extracted feature data to the matching processing section 21 of the server 20. Upon receiving the feature data, the matching processing section 21 executes a pattern matching process on the feature data and the classification templates 51 registered in the classification TP data management DB 22. The matching processing section 21 then further executes template matching using the individual templates 52 which are registered in the individual TP data management DB 23 and corresponds to the matched classification template 51. The matching processing section 21 identifies the target image 41 that is the captured marker.

Corresponding result information, for example, a particular image or a particular URL is registered in each of the individual templates 52 registered in the individual TP data management DB 23; the result information is to be output when a match is found. Therefore, when the target image 41 is identified as described above, the matching processing section 21 sends the result information corresponding to the individual template 52 to the mobile application 13 in the mobile terminal 10 with the camera. The mobile application 13 then displays the result information on the display 12.

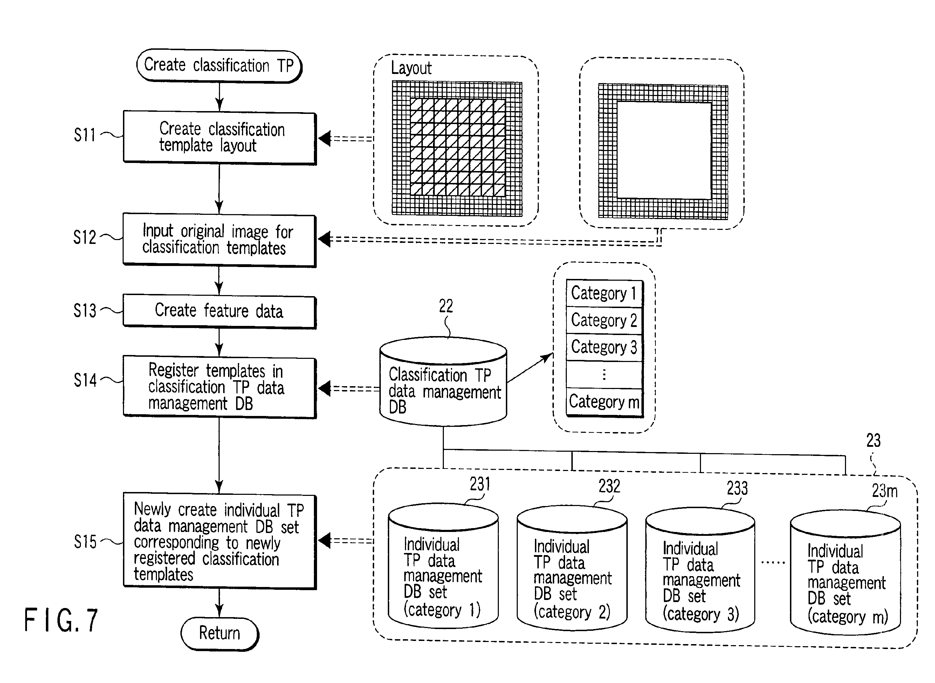

The operation of each section will be described below in detail with reference to FIG. 7.

The TP creating section 50 first defines a classification template layout (step S11). The classification template layout shows a cutout position on an original image (target image 41) in which a classification template 51 and an individual template 52 are to be created; at the cutout position, an image used as a classification template 51 is cutout in the original image. The classification template layout may be a combination of such a capture position and the resolution of the classification template 51.

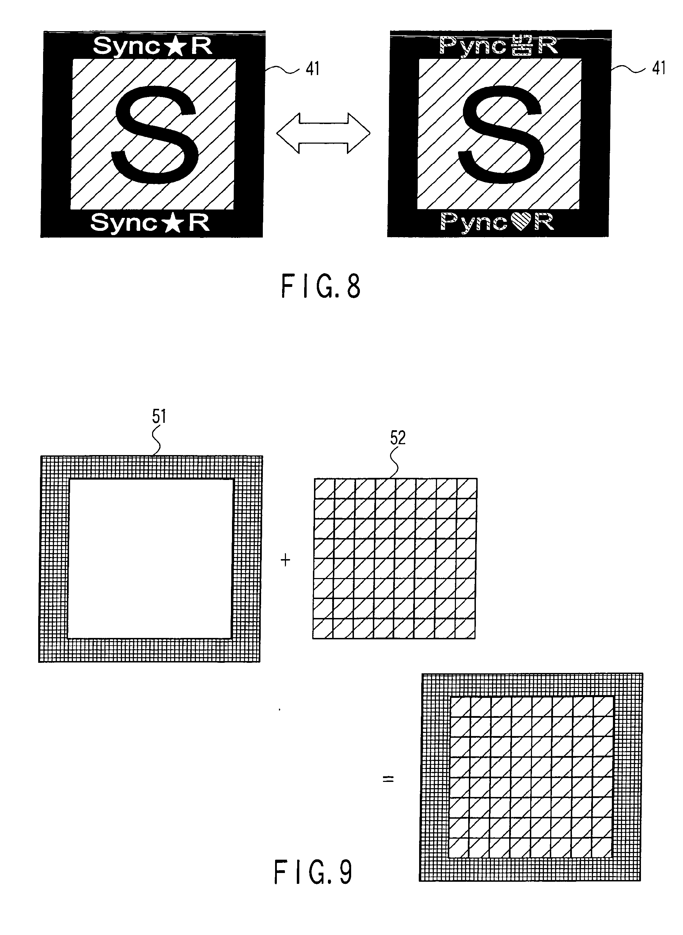

For example, template matching may result in a mismatch to a similar image such as the one shown in FIG. 8. In this case, as shown in FIG. 9, the possibility of mismatching can be reduced using a classification template which is a template having a higher resolution only in the area of frame of the square. Further, such classification templates 51 enable association with different result information even with the same individual template 52.

The expression "defining" a classification template layout includes the new "creation" of a layout and "selection" from existing layouts.

Once a classification template layout such as the one described above is defined, an original image is input in accordance with the defined classification template layout (step S12). In this case, the input original image is image data on the image cutout position in the target image 41 shown by the classification template layout. Then, in accordance with the defined template layout, feature data, that is, a classification template 51 for a category n, is created from the input original image (step S13). The feature data is then registered in the classification TP data management DB 22 of the server 20 (step S14). The feature data includes, for example, the distribution of feature points and density.

Subsequently, an individual TP data management DB set 23m corresponding to the newly registered classification template 51 for a category m is newly created in the individual TP data management DB 23 of the server 20 (step S15). FIG. 7 shows individual TP data management DB sets 231, 232, 233, ..., 23m corresponding to categories 1, 2, 3, ... m.

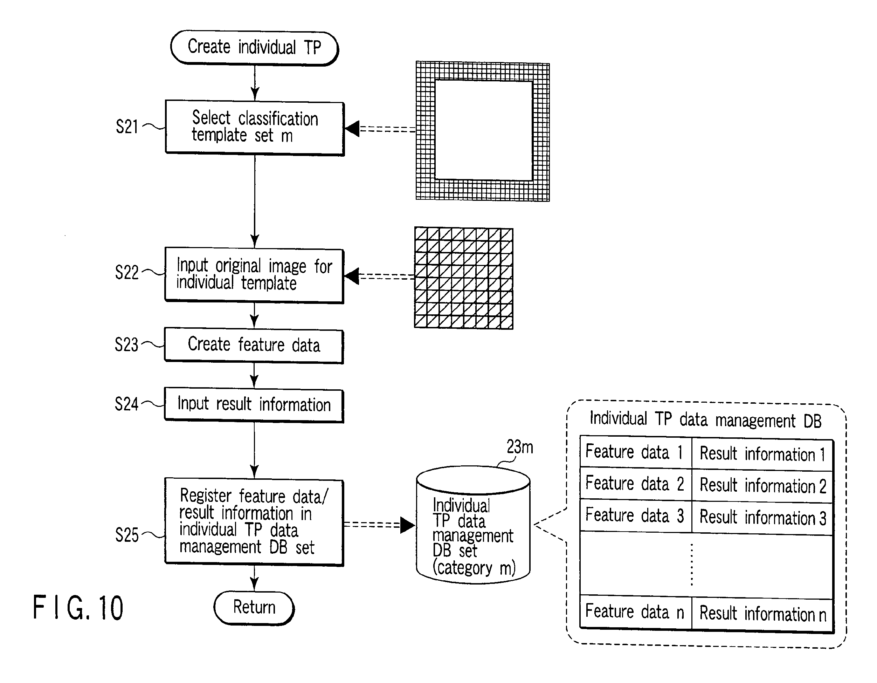

Now, with reference to FIG. 10, a detailed description will be given of an individual template creating process in the TP creating section 50.

The TP creating section 50 first selects the individual TP data management DB set 23m corresponding to the classification template, from a plurality of individual TP data management DB sets 23n in the individual TP data management DB 23 (step S21). Moreover, an original image at a position and resolution in accordance with the classification template is obtained from the target image 41 from which an individual template is to be created (step S22).

Then, feature data is created from the input original image (step S23). Result information, for example, URL of a particular Web site, is then input; the result information is to be output, for example, when the result of template matching is OK. The created feature data and input result information are registered in the selected individual TP data management DB set 23m (step S25).

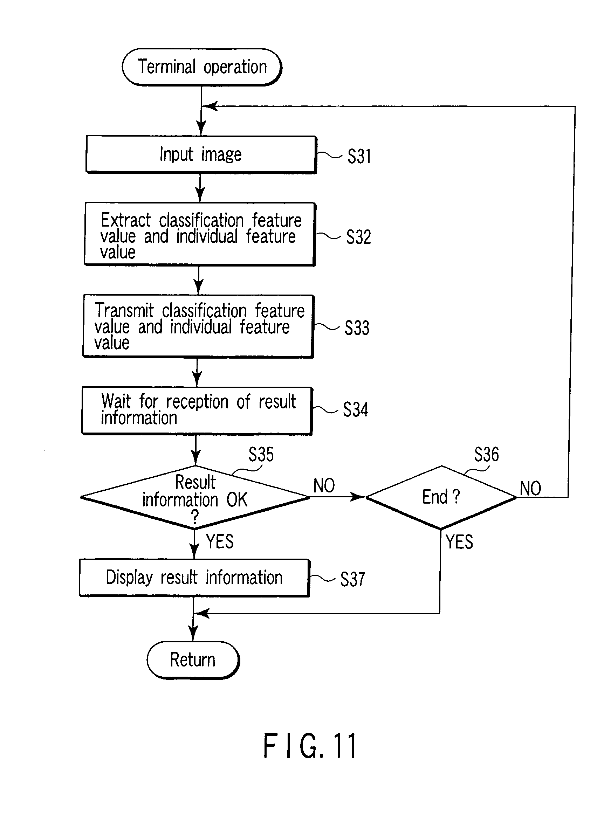

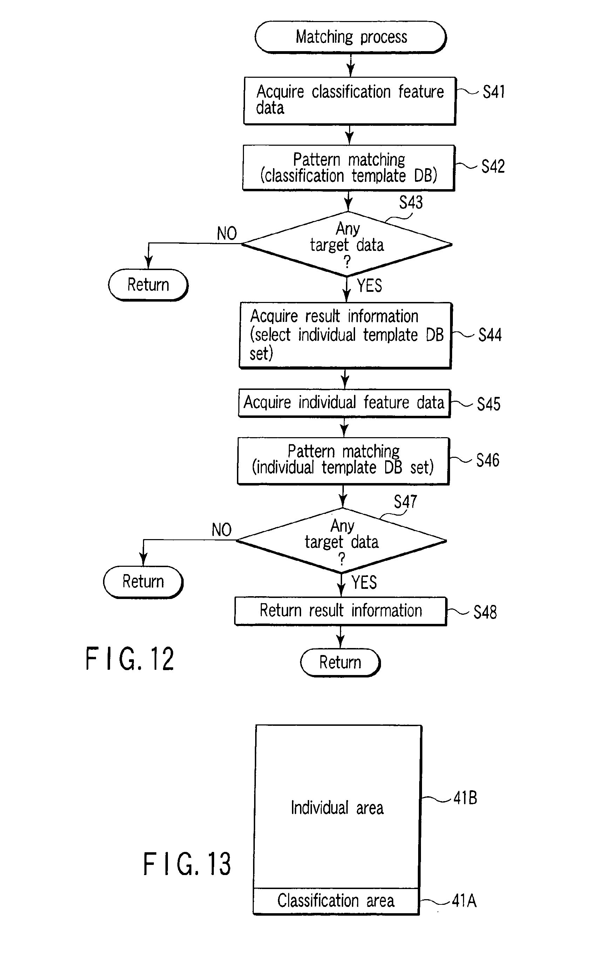

Now, with reference to FIGS. 11 and 12, description will be given of a terminal operation process in the mobile application 13 in the mobile terminal 10 with the camera and of a matching process in the matching processing section 21 of the server 20. Although FIG. 1 shows only one mobile application 13, the mobile terminal 10 with the camera has a plurality of mobile applications 13. In other words, one mobile application 13 exists for each template layout, and the started mobile application 13 varies depending on the type of the original target image 41.

When started, the mobile application 13 corresponding to a certain target image 41 causes the image input section 11 to input, to the apparatus, an image obtained by capturing the target image 41 in the page space 40 (step S31). The mobile application 13 extracts classification feature data and individual feature data on the image in accordance wit the template layout of the mobile application 13 (step S32). The mobile application 13 transmits the extracted classification feature data and individual feature data to the matching processing section 21 of the server 20 (step S34). The mobile application 13 subsequently waits to receive the result information from the matching processing section 21 (step S35).

The matching processing section 21 of the server 20 first acquires the classification feature data transmitted by the mobile application 13 (step S41). The expression "acquiring the classification feature data" may mean not only the reception of the transmitted classification feature data but also the storage of the transmitted classification feature data and individual feature data in a memory or the like, followed by reading of the stored classification feature data. The matching processing section 21 then executes a pattern matching process on the acquired classification feature data and the classification templates 51 registered in the classification TP data management DB 22 (step S42). If the pattern matching results in no target data candidate (step S43), the process is finished.

In contrast, if any target data candidate is found (step S43), the matching processing section 21 selects the individual TP data management DB set 23m corresponding to the classification template 51 in the individual TP data management DB 23, as result information (step S44). The matching processing section 21 then acquires the individual feature data from the mobile application 13. Here, the expression "acquiring the individual feature data" may mean not only the reception of the transmitted individual feature data but also the storage of the transmitted classification feature data and individual feature data in a memory or the like, followed by reading of the stored individual feature data. The matching processing section 21 then executes a pattern matching process on the acquired individual feature data and the individual templates 52 registered in the individual TP data management DB set 23m (step S46). If the pattern matching results in no target data candidate (step S47), the process is finished.

In contrast, if any target data candidate is found, the matching processing section 21 transmits the result information registered in the individual TP data management DB set 23m corresponding to the feature data on the target data candidate, to the mobile terminal 10 with the camera (step S48). The matching processing section 21 then finishes the process.

If the mobile application 13 does not receive result information returned by the matching processing section 21 of the server 20 even after the elapse of a predetermined time (step S35), then for example, it displays an error message or the like on the display 12 to ask the user whether or not to continue the process. If the user instructs the process to be ended (step S36), the process is ended.

In contrast, if the user instructs the process to be re-executed (step S36), the process returns to step S31 and is restarted with capturing of the target image 41.

On the other hand, if the mobile application 13 receives result information returned by the matching processing section 21 of the server 20 (step S35), it displays the result information on the display 12 (step S37) to finish the process.

The apparatus and method for identifying a marker in accordance with the present embodiment as described above execute a matching process on the in-frame template (individual template 52) selected by a matching process executed on the frame area template (classification template 51). This exerts the following effects.

The number of templates that can be registered increases by a factor equal to the number of classification templates (several hundreds).

Further, matching speed increases.

Moreover, the number of mismatches decreases.

Now, with reference to the drawings, description will be given of specific example of the apparatus and method for identifying a marker in accordance with the present embodiment.

### [First Specific Example]

In the present specific example, the classification template 51 is associated with a retrieval DB.

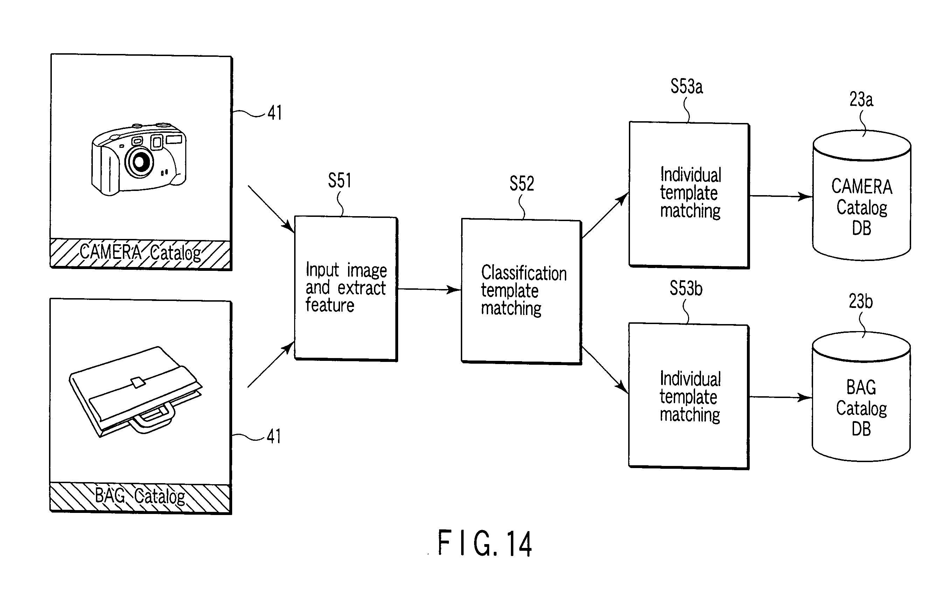

In this case, as shown in FIG. 13, the classification template 51 is a template corresponding to a classification area 41A on the target image 41 as a marker in which classification information is displayed. The individual template 52 is a template corresponding to an individual area 41B on the target image 41 in which detailed information is displayed. As shown in FIG. 14, a retrieval target DB is switched depending on the read classification template 51.

In the present specific example, a mobile phone with a camera is used as the mobile terminal 10 with the camera to smoothly sell articles by mail order through mail order magazines or catalogs.

To sell articles through mail order magazines or catalogs, information identifying the type of the retrieval DB is contained in the classification area 41A of the target image 41. An article image is contained in the individual area 41B of the target image 41. This allows the position, shape, size, and the like of the template to be determined depending on the position, shape, size, and the like of each area (the classification area 41A in which classification information is displayed and the individual information 41B in which detailed information is displayed) of the marker. Thus, in a matching process, the marker and template can be easily aligned with each other, resulting in high processing efficiency.

When the target image 41 is input via the image input section 11 of the mobile phone with the camera, the mobile application 13 extracts feature data from the classification area 41A and feature data from the individual area 41B (step S51). The matching processing section 21 of the server 20 uses the classification templates registered in the classification TP data management DB 22 to execute a matching process on the feature data extracted from the classification area 41A (step S52). In accordance with the result of the matching process, the matching processing section 21 selects the individual TP data management DB set 23n of the individual TP data management DB 23. In this case, the individual TP data management DB set 23n stores each individual template 52 and the corresponding article information as a retrieval target DB. In the example shown in FIG. 14, two types of retrieval DBs, a camera catalog DB 23a and a bag catalog DB 23b, are present. The matching processing section 21 uses the individual template 52 in the individual TP data management DB set 23n selected in accordance with the matching result using the classification template 51 to execute a template matching process on the feature data extracted from the individual area 41B by the mobile application 13. The matching processing section 21 thus identifies the article image contained in the individual area 41B of the target image 41 (steps S53a, S53b). The matching processing section 21 then returns article information registered in association with the article image, to the mobile application 13 as result information. The mobile application 13 can thus display the article information on the display 12.

Thus, the classification template 51 enables DBs to be switched, making it possible to prevent an increase in the time required for retrieval in spite of an increase in the number of individual templates 52.

### [Second Specific Example]

In the present specific example, the classification template 51 is associated with the application.

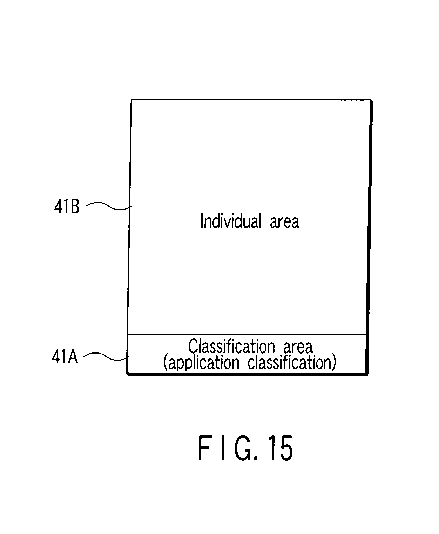

In this case, as shown in FIG. 15, the classification template 51 is a template corresponding to the classification area 41A on the target image 41 as a marker in which classification information is displayed. The individual template 52 is a template corresponding to the individual area 41B on the target image 41 in which detailed information is displayed. However, in the present specific example, the classification information displayed in the classification area 41A indicates the classification of the application.

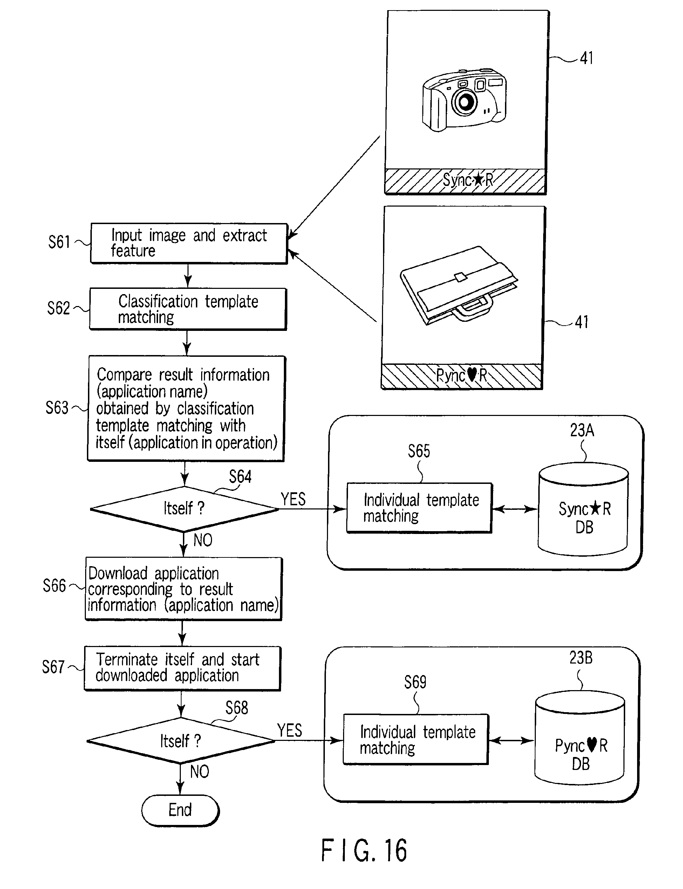

In the present specific example, as shown in FIG. 16, when the target image 41 is input via the image input section 11 of the mobile phone with the camera, the mobile application 13 extracts feature data from the classification area 41A and from the individual area 41B (step S61). The matching processing section 21 of the server 20 uses the classification templates registered in the classification TP data management DB 22 to execute a matching process on the feature data extracted from the classification area 41A (step S62). The matching processing section 21 then returns an application name indicating the application classification to the mobile application 13 as result information obtained.

The mobile application 13 compares the result information (application name) obtained by the classification template matching process with itself (step S63). If the result information indicates the mobile application 13 (step S64), the matching processing section 21 uses the individual template 52 in the individual TP data management DB set 23n (in this example, the individual TP data management DB set 23A) selected in accordance with the matching result using the classification template 51 to execute a template matching process on the feature data extracted from the individual area 41B by the mobile application 13. The matching processing section 21 thus identifies, for example, the article image contained in the individual area 41B of the target image 41 (step S65). The matching processing section 21 then returns article information registered in association with the article image, to the mobile application 13 as result information. The mobile application 13 can thus display the article information on the display 12.

On the other hand, if as a result of the comparison in step S63, the mobile application 13 determines that the result information (application name) obtained by the classification template matching process does not indicate itself (step S64), it downloads the application corresponding to the result information (application name) from the server 20 (step S66). The mobile application 13 then terminates itself and starts the downloaded application (step S67).

Subsequently, the started application checks whether or not it surely corresponds to the result information (application name) (step S68). If the started application does not correspond to the result information, it ends the process. In contrast, if the started application corresponds to the result information, the matching processing section 21 uses the individual template 52 in the individual TP data management DB set 23n (in this example, the individual TP data management DB set 23B) selected in accordance with the matching result using the classification template 51 to execute a template matching process on the feature data extracted from the individual area 41B by the mobile application 13. The matching processing section 21 thus identifies, for example, the article image contained in the individual area 41B of the target image 41 (step S69). The matching processing section 21 then returns article information registered in association with the article image, to the mobile application 13 as result information. The mobile application 13 can thus display the article information on the display 12.

Thus, the classification templates 51 are associated with the respective applications, and the application is switched depending on the read classification template. If none of the applications on the terminal corresponds to any of the classification templates, then downloading and executing applications associated with the respective classification templates 51 enables them to go to their dedicated DBs for retrieval.

### [Third Specific Example]

Now, a third specific example will be described.

The present specific example uses the mobile terminal 10 with the camera such as a mobile phone with a camera or PDA with a communication function. The present specific example is applied to the case in which a registered image is captured and recognized so that a predetermined operation (for example, starting of an audio output or a predetermined program, display of a predetermined URL, or superimposition of 3D objects) is performed.

To allow an image to be recognized, image data is registered as a database (what is called dictionary data) to be referenced but feature value database extracted from the image is used because it is more efficient and practical to compare image feature values than to directly compare images. Further, this database may be contained in the apparatus or may be present on a server that can be connected to the apparatus via mobile communications.

The present specific example utilizes both a method of calculating the arrangement relationship among feature points (points of densities higher or lower than the rest of the image) to be a combination of vector quantities and a method of executing a template matching process by comparing the densities of corresponding divided surfaces to obtain a feature value. The frame shape of the classification template 51 is recognized on the basis of the feature point scheme. In this case, the frame is not limited to a rectangular or circular shape but may have any shape such as a star or a heart. Further, recognizing a particular design different from the frame on the basis of the feature point scheme may have the advantage of an increased speed or an increased communication speed.

The present specific example relates to a practical processing method for distributing a matching server if a very large number of marker images (query images) are present. Images present as parts of or separately from the target image are registered so as to indicate information specifying a matching server for reference data. This is called a primary (matching) server. The main function of the primary server is normally to specify the location (address) of a secondary server. In the present specific example, the primary server additionally specifies the location of a secondary marker image.

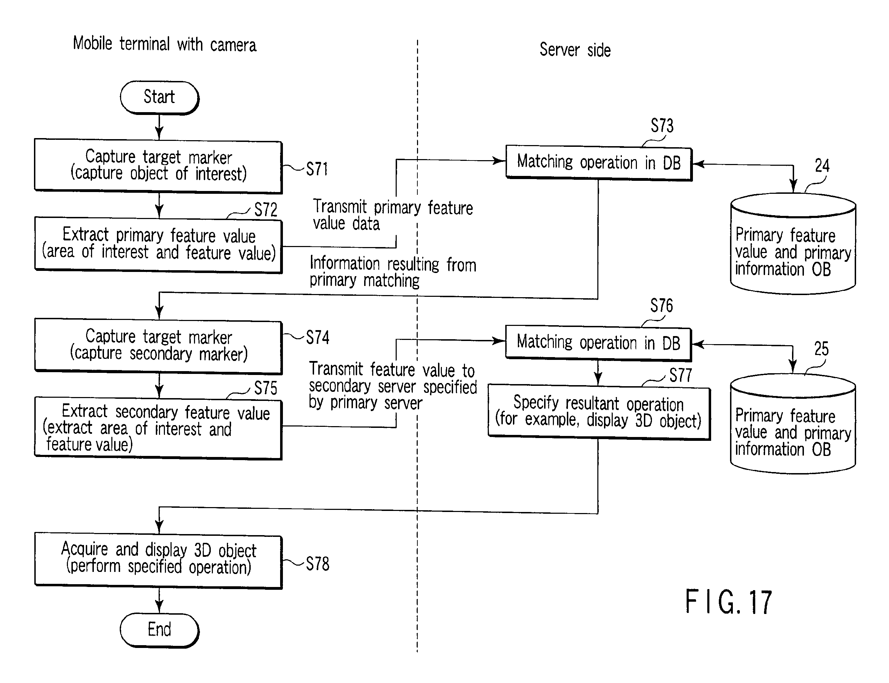

That is, as shown in FIG. 17, the mobile terminal 10 with the camera captures a target marker (primary marker) (step S71) and extracts a primary feature value (step S72). The extracted primary feature value is transmitted to the server 20 (primary server). The server 20 executes a matching process on the extracted primary feature value and the primary feature values registered in a primary information DB 24 corresponding to the classification TP data management DB 22 (step S73). The server 20 transmits information resulting from the primary matching process to the mobile terminal 10 with the camera.

The mobile terminal 10 with the camera displays the information resulting from the primary matching process. In response to the display, the user captures a target marker (secondary marker) with the mobile terminal 10 with the camera (step S74). A secondary feature value is thus extracted (step S75) and transmitted to the server 20 (secondary server). The server 20 executes a matching process on the extracted secondary feature value and the secondary feature values registered in a secondary information DB 25 corresponding to the individual TP data management DB 23 (step S76). A resultant operation specification resulting from the secondary matching process is transmitted to the mobile terminal 10 with the camera (step S77).

The mobile terminal 10 then performs an operation, for example, the acquisition and display of 3D objects, in accordance with the resultant operation specification (step S78).

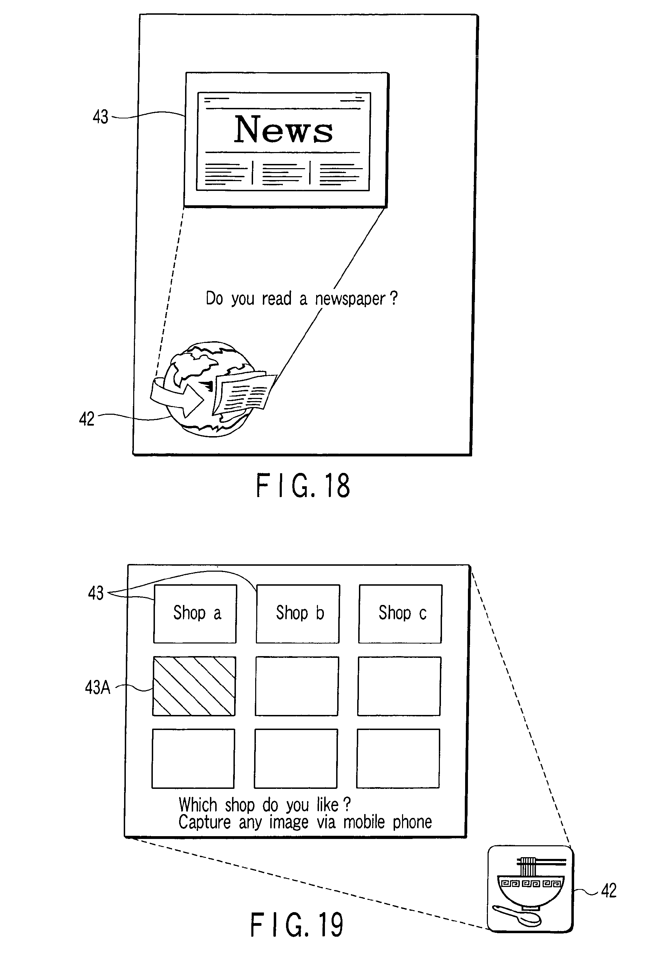

That is, the primary server specifies the address of the secondary server and simultaneously roughly specifies the area (in FIG. 18, the area above a primary marker 42 (icon)) of a secondary marker 43. Even if the primary marker 42 is captured together with the secondary marker 43, during the extraction of the secondary feature value, the parts of the captured image other than the specified area are masked and not read, thus reducing mis-recognitions.

Further, since the secondary server specified by the primary server is already limited to a certain category, the image feature value itself resulting from the matching process in each secondary database is likely to be correct. For example, in FIG. 19, the primary marker 42 is an icon of ramen (Chinese noodles), so that the secondary server related to the secondary marker 43 is limited to information on ramen shops. This prevents the retrieval of other information. That is, even with a plurality of shop images present in the captured image as secondary markers 43, the pre-limitation of the category by the primary marker 42 allows a matching process in the secondary information DB 25 to be executed only on the particular secondary marker 43A, which is an image of a ramen shop.

With the above matching process system set up, a registered design is captured by the mobile terminal 10 with the camera. The mobile application 13 contained in the mobile terminal 10 with the camera calculates a feature value on the basis of the arrangement relationship among feature points. Even with the relatively low resolution of the image input section 11, a two-step matching process such as in the present specific example allows a reduction in mis-recognition rate and an increase in speed. In fact, enhancing reconizability by a single matching process requires a feature value capacity of 20 to 70 kB. However, the use of simple icons as primary markers 42 as in the present specific example requires a feature value of only about 5 to 10 kB. Moreover, recognition of the secondary marker 43 based on the template scheme requires a feature value of only at most 5 kB. That is, the purpose of the primary marker 42 is only to specify the secondary matching server from which useful information is derived. Thus, the above feature value capacity is sufficient to specify, for example, a secondary server with about 1,000 data. This also applies to the secondary matching process. The number of data in the secondary server is limited to about 1,000, and the feature value is calculated on the basis of the template scheme. This enables communications with a very small data capacity of at most 5 kB and about 1 kB, increasing the processing speed.

In particular, this scheme is effective if a very large number of (at least 1,000) images are registered in the database and if some of the images are very similar to one another.

### [Fourth Specific Example]

Now, a fourth specific example will be described.

The above first specific example takes the case of mail order magazines and catalogs and shows the effects of use of the target image 41 composed of the classification area 41A and individual area 41B and of switching of the retrieval target DB based on the classification area 41A.

However, these effects are not limited to mail order magazines and catalogs but can also be obtained using a system allowing the user to freely register images.

A road sign, a building, or an advertising display is specified as the classification area 41A so that capturing a scene including any of these allows a process similar to that in the first specific example to be executed. That is, the retrieval target DB is switched to recognize the individual area 41B in the captured image, allowing related contents to be presented to the user. Of course, specifying no particular target as the classification area 41A means the lack of particular classification information. The retrieval target DB is thus switched to the one corresponding to this meaning.

In this case, the classification area 41A may be recognized, while the individual area 41B may not be recognized. That is, no registered individual area 41B may be contained in the captured image. For example, if a provider and users of contents provided by a system can be clearly defined as in the case of a mail order system provided by a certain corporation, the above corresponds to a request for an unregistered image, which does not pose any problem. On the other hand, with a system identifying a keyword tag related to an image and retrieving information on the basis of the keyword tag, a system providing bulletin board information or word-of-mouth information related to the image, or the like, the contents (the keyword tag corresponding to the image) provider for the present system is not definite. Consequently, the image cannot be used as a retrieval target until anyone registers it. This is an environment inconvenient to the user.

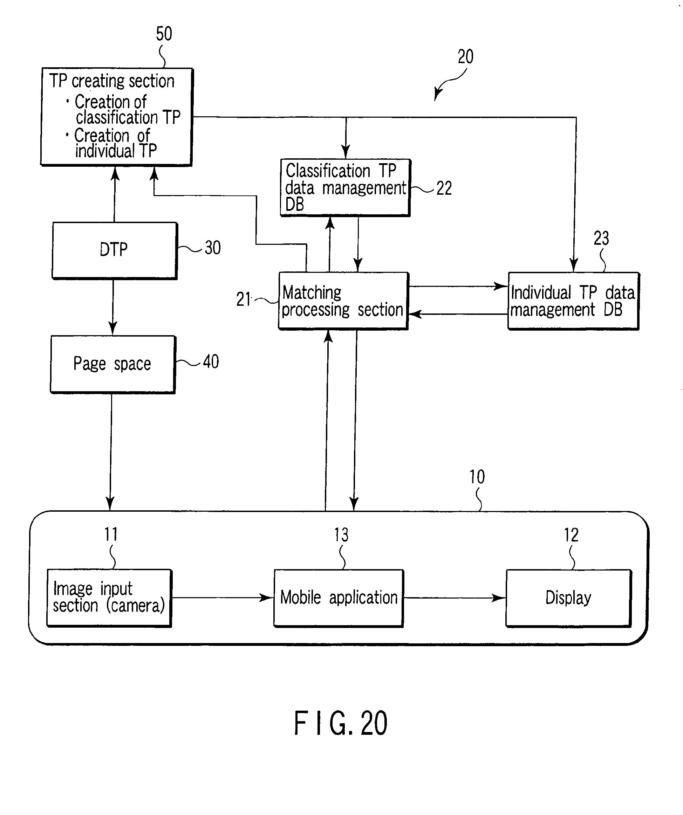

In this case, as shown in FIG. 20, an effective system allows new registrations in a database corresponding to the classification area 41A. Users themselves of the present system can increase the number of registration targets. The users have only to register images captured by themselves as well as expected keyword tags and can thus operate the system very easily.

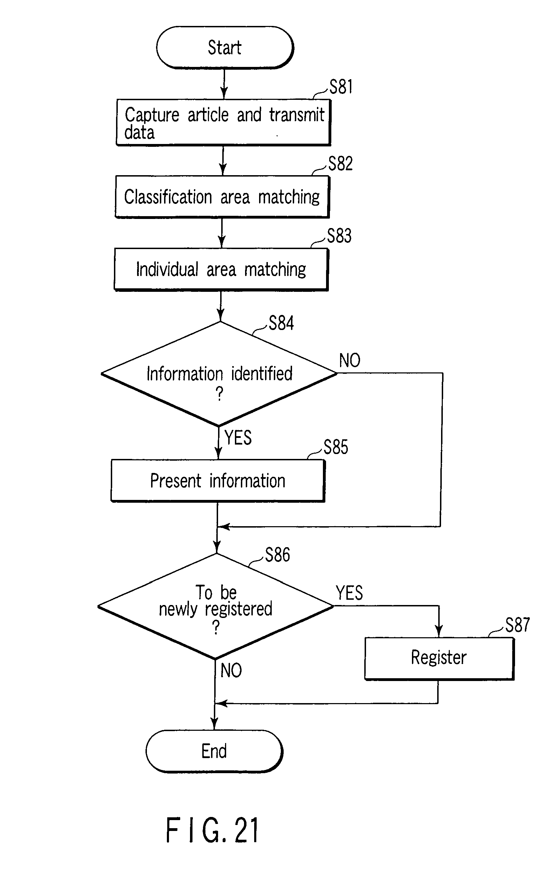

The registration is carried out as shown in FIG. 21. First, capturing is carried out via the image input section 11 of the mobile terminal 10 with the camera such as a mobile phone with a camera. The data obtained is transmitted to the matching processing section 21 (step S81). The matching processing section 21 executes a matching process on the classification area 41A of the target image 41 to identify the retrieval target DB (classification TP data management DB 22). Of course, if no particular classification area is present, the retrieval target DB corresponding to the state of absence may be identified. Then, the matching processing section 21 executes a matching process on the individual area 41B of the target image 41 to identify information to be presented to the user (step S83) .

Here, the matching processing section 21 determines whether or not any information to be presented to the user has been successfully identified (step S84). If any information has been successfully identified, the matching processing section 21 presents the identified information (step S85). In this case, if plural pieces of information have been identified, they may be simplified and presented in list form. Alternatively, if only one piece of information has been identified, a list may be displayed or the identified information may be directly displayed in detail.

In contrast, if no information to be presented to the user has been successfully identified (step S84), the matching processing section 21 acquires instruction information from the user in order to determine whether or not to register information (step S85). If information registration is not to be carried out, the process is ended.

On the other hand, if the instruction information indicates that the user desires to register information, the user can register any information for the captured target image 41. For example, the user can register URL of a particular mobile phone site, or a keyword or comment for the captured target image 41.

### [Fifth Specific Example]

Now, a fifth specific example will be described.

User-friendliness can be effectively improved by dividing the target image 41 into more than two areas rather than into the classification area 41A and individual area 41B. For example, a plurality of individual areas may be present for one classification area or each area may serve both as the classification area and as the individual area.

It is assumed that for example, the target article is tableware appearing on mail-order magazines or catalogs. An article photograph of tableware corresponding to the target image 41 contains plates, dishes, cups, knives, and forks arranged on a table. In this case, for example, a pattern portion of each piece of tableware is registered as the classification area 41A, and the entirety of each piece of tableware is registered as the individual area 41B. This enables specific articles with respective particular patterns to be accurately recognized.

Moreover, the individual elements need not necessarily appear in the same photograph but in the respective photographs.

To register templates, the individual elements are each registered and are also registered as a group. In this case, information on the relative positions and/or postures of the individual elements may also be registered.

Recognizing at least one of the elements registered as a group allows all the information contained in the group to be presented.

This enables a series of tableware pieces with the same pattern to be collectively presented.

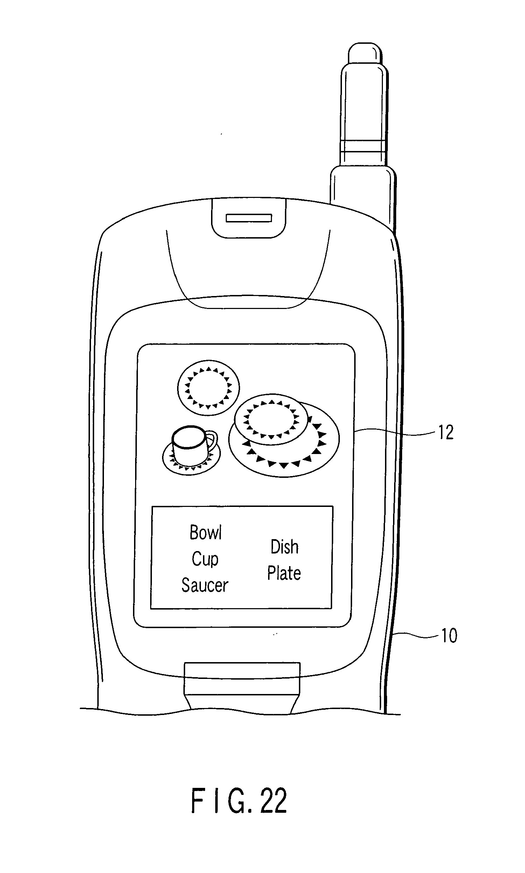

Further, when a tableware set appears in one large photograph as shown in FIG. 22, recognition result information may be provided so as to reflect the positions of tableware pieces in the capturing condition. For example, if "a fork, a plate, a dish, and a cup" are arranged in this order from the left end, the recognition result shows these tableware pieces in the same order. This allows the user to easily associate the recognition result with the captured image. Even if the captured image does not contain any knife, the recognition result may present information on a knife at the right end on the basis of the group information.

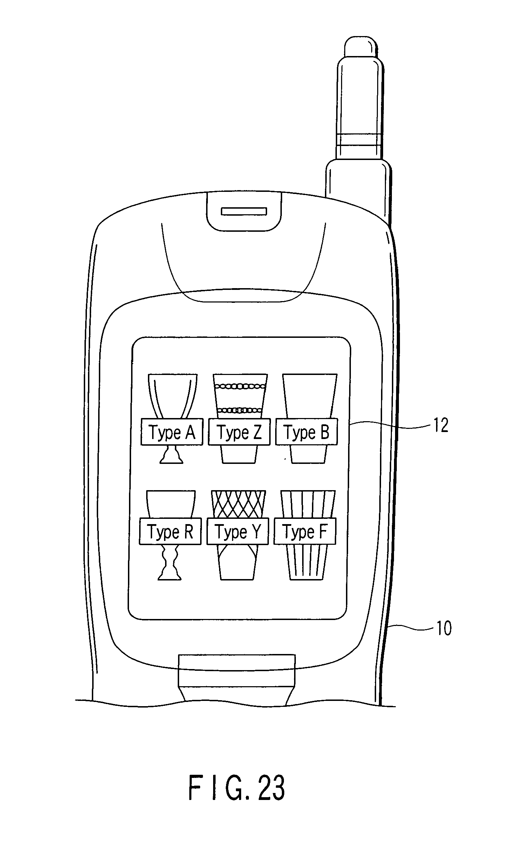

Alternatively, superimposition on a captured image such as that shown in FIG. 23 is effective in making the user understand the relationship between the target and the recognition result.

The display order of the recognition result is not limited to the above method. For example, an item close to the center of the captured image may be displayed highest in the list. Alternatively, an item with the smallest difference in vertical position between the captured image and the registered image may be displayed highest in the list as the most reliable result.

Further, the elements contained in the captured target image 41 are displayed in list form but elements not contained in the captured target image 41 are added to the list as "others" so as to be displayed in a lower layer though they belong to the same layer group as that to which the elements contained in the captured target image 41 belong. This prevents the user from viewing more than required information, leading to efficient operations.

The group organization is not limited to a single layer. The elements are hierarchically grouped so that a group contains another group or other groups. In this case, the size of display screen of the display 12 needs to be considered in determining to what layer level the contents of the recognition result are presented. For a large screen, it is effective to display the group to which the smallest unit element recognized belongs, to a detailed information level, while presenting information on the hierarchical structure. On the other hand, for a small screen such as of mobile phones, it is effective to display only the group to which the smallest unit element recognized belongs.

Further, for the cost distribution between those bearing the costs of distribution of print media and those not, it is effective to place a discount coupon icon near a photograph of an article as the classification area 41A and managing the system according to the rule described below.

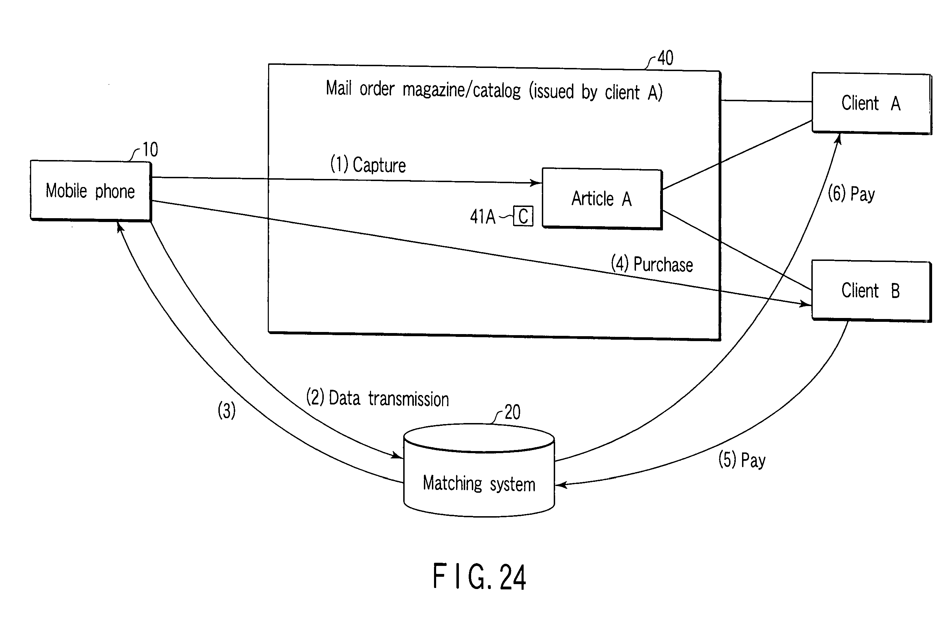

As shown in FIG. 24, a client A issues a mail order magazine or catalog, and the client A and a client B are registered as mail order distributors for articles appearing in a page space 40 of the magazine or catalog. Of course, these mail order distributors may vary depending on the article.
(1) An article in the page space 40 is captured by the image input section 11 of the mobile terminal 10 with the camera such as a mobile phone with a camera.
(2) The data is transmitted from the mobile terminal 10 with the camera to (the matching processing section 21 of) the server 20.
(3) If the server 20 recognizes the classification area 41A in the user's captured image, it returns article information with discount information to the mobile terminal 10 with the camera. In this case, which page space has been captured can be determined from the classification area 41A as described in the first specific example.
(4) The user connects to a particular client (for example, the client B) on the basis of the article information.
(5) The connection target client (client B) pays a referral fee to the present system operator.
(6) The present system operator pays a part of the referral fee received from the client to the paper space provider (in this case, the client A) identified in (3).

As a result, the client A can recover a part of issuance cost of the mail order magazine or catalog. On the other hand, the client B, which does not issue any mail order magazine or catalog, can utilize the client A's mail order magazine or catalog on the basis of the reasonable relationship in which the client B partly bears the issuance cost of the mail order magazine or catalog.

Further, if a plurality of targets such as mail order articles are to be handled, the mobile application may perform a plurality of consecutive operations each of capturing one of the targets and then transmit the plurality of captured images to the matching processing section 21 of the server 20. This prevents each capturing operation from requiring both an operation on the mail order site (addition to a shopping cart) and capturing executed by the application, and improves user friendliness when a plurality of items are collectively purchased.

Further, when a plurality of targets are consecutively captured, the data may be automatically transmitted to the matching processing section 21 of the server 20, with the results accumulated on the server 20. In this case, when the apparatus finally accesses the mail order site, a plurality of items corresponding to the previous matching results can be easily specified to be purchased. This improves user friendliness.

Moreover, when the matching processing section 21 executes an automatic process after capturing, the user's previous matching results can be used to improve the reliability of identification in the next matching process. That is, with a plurality of final candidates present in the identification process, the category, attribute, and the like of the user's capturing target can be estimated from the previous matching results. This information can then be used to make further selections.

### [Sixth Specific Example]

Now, a sixth specific example will be described.

The fifth specific example describes the registration of the plurality of areas into which the original image is divided. The sixth specific example relates to a more effective technique for the case in which motion picture is to be recognized.

If a motion picture is to be recognized, registering only some frames of the motion picture is sufficient. For example, when a first frame containing an entertainer A and a car B is registered, the entertainer A and car B are registered as a group. A second frame contains only the car B and is not registered with the present system. When the user captures the second frame in this condition, the car B, registered as the first frame, can be recognized, and information on the entertainer A, registered as the group, can also be registered. Exerting this effect does not require the information register to perform any operation on the second frame, which does not contain the entertainer A. This improves the efficiency of the registering operation. The first and second frames need not necessarily be consecutive. In the motion picture, there may be the passage of a predetermined time between the first frame and the second frame.

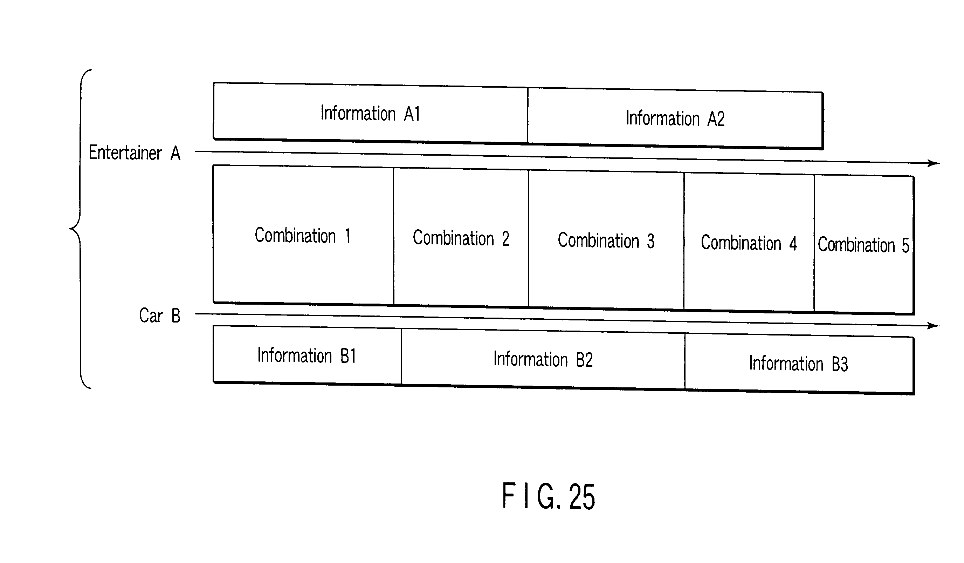

The entertainer A and car B are registered both as registration targets and as a group. For example, this allows provided contents corresponding to information on the talent A or car B to be varied independently along the time axis. As shown in FIG. 25, pieces of information to be recognized may be combined together in many ways. However, not all the possible combinations need be registered but information on each target can be varied. This enables all the possible combinations to be automatically handled with the minimum effort.

## Claims

1. A marker identifying apparatus which identifies a marker (41; 42; 43) contained in an image, **characterized by** comprising:
image input means (11) for inputting an image to the apparatus;
classification template matching means (13, 21) for executing template matching on the input image input by the image input means, using classification templates (51) corresponding to classification information on markers; and
individual template matching means (13, 21) for executing template matching on the input image input by the image input means, using individual templates (52) corresponding to the classification template matched in the classification template matching and to detailed information on the markers.

2. The marker identifying apparatus according to claim 1, **characterized in that** the classification templates and individual templates are managed so that a plurality of individual templates correspond to each classification template.

3. The marker identifying apparatus according to claim 1, **characterized in that** each classification template corresponds to an area on the marker in which the classification information is displayed, and
each individual template corresponds to an area on the marker in which the detailed information is displayed.

4. A method for identifying a marker (41; 42; 43) contained in an image, **characterized by** comprising:
inputting an image;
executing template matching on the input image using classification templates (51) corresponding to classification information on markers; and
executing template matching on the input image using individual templates (52) corresponding to the classification template matched in the classification template matching and to detailed information on the markers.
